# EUROPÄISCHE PATENTANMELDUNG

(11) **EP 2 600 317 A2**
(43) Veröffentlichungstag der Anmeldung: **05.06.2013**
(21) Anmeldenummer: 12008027.0
(22) Anmeldetag: 29.11.2012
(51) Int. Cl.: G07C 1/10, H04L 12/28, G06Q 10/10

(54) **System zum Überwachen von Objekt- und/oder Personenbewegungen**

(30) Priorität: 30.11.2011 ES 201101282
(71) Anmelder: Televés, S.A., 15706 Santiago de Compostela (ES)
(72) Erfinder: Ortiz Sanchez, Bayrón, E-15706 Santiago de Compostela (ES); Fernandez Carnero, José Luis, E-15706 Santiago de Compostela (ES)
(74) Vertreter: Dosterschill, Peter

(57) **Zusammenfassung**

Die Erfindung betrifft ein System zum Überwachen von Objekt- und/oder Personenbewegungen, das Erkennungsmittel DM1, DM2, DM3 aufweist. Die Erkennungsmittel erkennen Personen und/oder Objekte in vorgebbaren örtlichen Bereichen und erzeugen Informationen I1, I2, I3, die systemexterne Einrichtungen, insbesondere Leuchten, Heizungen, Fenster, Alarmeinrichtungen, und Telekommunikationsgeräte in Abhängigkeit personenindividueller Informationen und/oder in Abhängigkeit eines Personen- und/oder eines Objektprofils voreinstellen und/oder steuern.

## Beschreibung

Die Erfindung betrifft ein System zum Überwachen von Objekt- und/oder Personenbewegungen nach dem Oberbegriff des Patentanspruchs 1.

Ein Tor bzw. eine Tür stellt einen Übergangsbereich zwischen unterschiedlichen Bereichen zum Beispiel in einer Wohnung, allgemein in Gebäuden oder zum Beispiel im Freien dar; damit stellen Tore bzw. Türen strategische Punkte an den Schnittstellen dieser Bereiche dar. Die vorliegende Erfindung betrifft ein System mit einer Überwachungseinrichtung, die insbesondere einer Tür zugeordnet ist, sowie deren Eigenschaften hinsichtlich Konstruktion, Struktur, Architektur und Entwurf (Design), ihrer Ausstattung mit insbesondere elektronischen Mitteln zur Erkennung von Personen und Objekten, sowie ihrer optimierten Positionierung.

Im Markt ist eine große Anzahl von domotischen Systemen bekannt, und von Systemen, die Anwesenheiten erfassen, unterschiedlicher Größen und Komplexität, welche in unterschiedlicher Weise den Weg, die Anwesenheit und die örtliche Position von Personen erkennen. Diese Systeme kommen zum einen in Wohnbereichen zur Anwendung und in anderen Bereichen, wobei diese Systeme professioneller Natur sind und für die Sicherheit in Gebäuden und anderen Orten eingesetzt werden, an denen eine große Anzahl von Personen anwesend sind, zum Beispiel in Flughäfen oder an Orten, an denen der Sicherheit eine große Bedeutung zukommt.

Einerseits gibt es innerhalb der Systeme für Wohnbereiche verschiedene Vorrichtungen und Systeme, einfach strukturierte Vorrichtungen wie beispielsweise Anwesenheitssensoren mit unterschiedlichen Technologien (Infrarot, PIR, usw.) oder komplexere Systeme wie Überwachungs-Video-Vorrichtungen, mit der Möglichkeit, die Kamerabilder auszuwerten, wobei verschiedene Technologien kombiniert werden, zum Beispiel die Kombination von Überwachungs-Video-Vorrichtungen und Sensoren und Auswertungseinrichtungen. Andererseits gibt es innerhalb der professionellen Systeme für die Sicherheit von Gebäuden und großen Anlagen mit umfangreichem Personenverkehr Erkennungs- bzw. Überwachungssysteme auf Wegen, Durchgängen, Durchgangskabinen, usw., welche im allgemeinen zur Erkennung von Metall, gefährlichen Gegenständen, Waffen, usw. verwendet werden. Jedoch ist auch die Erkennung anderer Gegenstände möglich.

Aus US 5,541,585 ist ein Sicherheitssystem zur Kontrolle des Zugangs von Gebäuden bekannt.

Der Erfindung liegt die Aufgabe zugrunde, ein System zum Überwachen von Objekt- und/oder Personenbewegungen zu schaffen, das die Auswertung künftiger Überwachungen vorbereitet.

Diese Aufgabe wird durch ein System gelöst, das in den Patentansprüchen definiert ist.

Die Erfindung zeichnet sich durch eine Mehrzahl von Vorteilen auf.

Eine vorteilhafte Ausführungsform des erfindungsgemäßen Systems zum Überwachen von Objekt- und/oder Personenbewegungen weist folgende Systemkomponenten auf:
- ein Tor bzw. eine Tür und/oder einen Rahmen zwischen einem ersten örtlichen Bereich und einem zweiten örtlichen Bereich,
- wenigstens ein erstes Erkennungsmittel zum Identifizieren von Objekten und/oder von Personen und zum Erzeugen einer ersten Information, die eine Identifikation von Objekten und/oder von Personen bezeichnet,
- wenigstens ein zweites Erkennungsmittel zum Erkennen einer Anwesenheit von Objekten und/oder von Personen in dem ersten örtlichen Bereich oder in dem zweiten örtlichen Bereich und zum Erzeugen einer zweiten Information, die eine Identifikation von Objekten und/oder von Personen in dem ersten örtlichen Bereich oder in dem zweiten örtlichen Bereich bezeichnet, und/oder
- wenigstens ein drittes Erkennungsmittel zum Erkennen einer Bewegung eines Objekts und/oder einer Person von dem ersten örtlichen Bereich in den zweiten örtlichen Bereich und zum Erzeugen einer dritten Information, die eine Identifikation einer Bewegung eines Objekts und/oder einer Person von dem ersten örtlichen Bereich in den zweiten örtlichen Bereich oder von dem zweiten örtlichen Bereich in den ersten örtlichen Bereich bezeichnet, und/oder
- wenigstens eine Uhr, die eine erste Zeitinformation generiert, die den Zeitpunkt der Identifikation eines Objekts und/oder einer Person bezeichnet, die eine zweite Zeitinformation generiert, die die Zeit (den Zeitpunkt und/oder den Zeitraum) der Identifikation eines Objekts und/oder einer Person in dem ersten örtlichen Bereich oder in dem zweiten örtlichen Bereich bezeichnet, die eine dritte Zeitinformation generiert, die die Zeit (den Zeitpunkt und/oder den Zeitraum) der Bewegung eines Objekts und/oder einer Person von dem ersten örtlichen Bereich in den zweiten örtlichen Bereich oder von dem zweiten örtlichen Bereich in den ersten örtlichen Bereich bezeichnet,
- einen Speicher, in dem die erste Information, die zweite Information, die dritte Information, die erste Zeitinformation, die zweite Zeitinformation und/oder die dritte Zeitinformation gespeichert wird, und
- wenigstens einen Prozessor, der mit dem ersten Erkennungsmittel, dem zweiten Erkennungsmittel und/oder mit dem dritten Erkennungsmittel sowie mit dem Speicher verbunden ist.

Dem Prozessor des erfindungsgemäßen Systems ist ein Betriebsprogramm zugeordnet, das Profile wenigstens eines Objekts und wenigstens einer Person erzeugt, wobei die Profile insbesondere die erste Information, die zweite Information, die dritte Information, die erste Zeitinformation, die zweite Zeitinformation und/oder die dritte Zeitinformation enthalten. Die Profile können auch weitere Informationen, beispielsweise Informationen enthalten, die die Berechtigung wenigstens jeweils einer Person bezeichnen, einen räumlichen Bereich zu betreten bzw. sich dort aufzuhalten, oder die Berechtigung wenigstens jeweils einer Person, eine oder mehrere externe Einrichtungen, wie z.B. Telekommunikationsendgeräte zu benutzen. Dies gilt auch hinsichtlich der Berechtigung, dass bestimmte Objekte in einen Bereich eingebracht bzw. aus diesem entfernt werden.

Das erfindungsgemäße System ermöglicht damit eine Mehrzahl unterschiedlicher Nutzungen.

Zum einen lassen sich personen- bzw. objektbezogene Profile erstellen, die zum Beispiel zur Voreinstellung als auch zum Betrieb zum Beispiel externer Einrichtungen genutzt werden können. Hierzu gehören unter anderem die Einrichtungen für die Klimatisierung von Räumen, individuell für eine vorgegebene Person, oder auch abhängig von der Anzahl bestimmter Personen, oder zum Beispiel von den bisherigen Nutzungen der Klimatisierung durch bestimmte Personen.

Diese Profile lassen sich auch für die Freigabe bzw. die Sperre oder die Voreinstellung von Telekommunikationsgeräten, den Zugang zu Räumen, Bereichen, Geldschränken, Servern, usw. für bestimmte Personen nutzen.

Zum anderen können die vorgenannten Dienste (Freigabe bzw. Voreinstellung, Sperre) auch auf Grund der im erfindungsgemäßen System gebildeten bzw. eingegebenen Information (I1, 14, I5) realisiert werden, ohne dass Profile erstellt werden.

In einer weiteren vorteilhaften Ausführungsform des erfindungsgemäßen Systems zum Überwachen von Objekt- und/oder Personenbewegungen, ist das Betriebsprogramm in der Weise ausgestaltet ist, dass der Prozessor systemexterne Einrichtungen, insbesondere Leuchten, Klimageräte, Heizungen, Fenster, Alarmeinrichtungen, steuert, die unterschiedliche Betriebsweisen in Abhängigkeit eines Personen- und/oder Objektprofils durchführen.

Eine weitere vorteilhafte Ausführungsform des erfindungsgemäßen Systems weist ein Steuerwerk auf, das den Prozessor, den Speicher und die Uhr aufweist.

In einer weiteren vorteilhaften Ausführungsform des erfindungsgemäßen Systems sind das erste Erkennungsmittel, das zweite Erkennungsmittel und das dritte Erkennungsmittel in dem Tor und/oder in dem Rahmen integriert oder benachbart zu dem Tor und/oder dem Rahmen angeordnet sind. Insbesondere ist das Steuerwerk in dem Tor und/oder in dem Rahmen integriert oder benachbart zu dem Tor und/oder dem Rahmen angeordnet.

In einer weiteren vorteilhaften Ausführungsform des erfindungsgemäßen Systems ist das Steuerwerk außerhalb des Tors und/oder außerhalb des Rahmens angeordnet.

Eine weitere vorteilhafte Ausführungsform des erfindungsgemäßen Systems ist dadurch gekennzeichnet, dass das Tor und/oder der Rahmen eine Kommunikationsschnittstelle aufweist, die Steuerinformationen mit dem Steuerwerk austauscht.

Insbesondere weist das erfindungsgemäße System in vorteilhafter Weise mehr als ein Tor und/oder mehr als einen Rahmen auf. Weiterhin weist in dem erfindungsgemäßen System jedes Tor und/oder jeder Rahmen eine Kommunikationsschnittstelle auf.

In vorteilhafter Weise ist genau ein Steuerwerk für die Steuerung des Systems vorgesehen.

Schließlich ist das Betriebsprogramm, das dem erfindungsgemäßen System zugeordnet ist, in der Weise ausgestaltet, dass die Generierung von Profilen von Objekten und/oder von Profilen von Personen auf der Basis einer zusätzlichen Information erfolgt, die in das System eingegeben wird. Insbesondere können auch systemextern generierte Profile als zusätzliche Information in das System eingegeben werden.

Im Folgenden werden Beispiele vorteilhafter Ausführungsformen des erfindungsgemäßen Systems beschrieben.

Es zeigt
- Figur 1: zwei Bereiche einer Wohn- oder Büroeinheit mit einer Tür und einem Türrahmen, dem das erfindungsgemäße System zugeordnet ist;
- Figur 2: Komponenten des erfindungsgemäßen Systems, wobei ein erster Teil der Systemkomponenten in dem Türrahmen oberhalb der Tür und ein zweiter Teil der Systemkomponenten in dem Türrahmen an einer Seite der Tür angeordnet ist;
- Figur 3: eine Ausführungsform, bei der ein Teil der Systemkomponenten außerhalb des Türrahmens angeordnet ist; und
- Figur 4: weitere Ausführungsformen mit unterschiedlichen Anordnungen der Systemkomponenten.

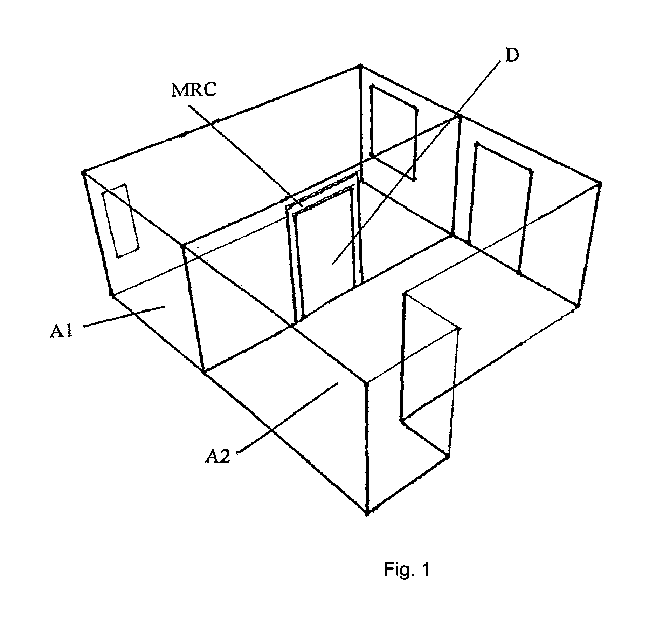

Wie in Figur 1 dargestellt, weist das erfindungsgemäße System zur Überwachung von Objekt- und/oder Personenbewegungen eine Tür D mit einem Rahmen MRC auf. Die Tür D ist zwischen zwei (hier benachbarten örtlichen) Bereichen A1 und A2 einer Wohneinheit, einer Büroeinheit bzw. einer sonstigen Raumeinheit angeordnet und hat einen Rahmen MRC. In diesem Rahmen MRC ist das erfindungsgemäße System grundsätzlich angeordnet; es kann jedoch auch vorgesehen sein, dass das erfindungsgemäße System wie in den anderen Figuren zum Beispiel mit einem Teil der Systemkomponenten außerhalb des Rahmens MRC angeordnet ist.

Der Begriff Tür D umfasst auch den Begriff Tor bzw. Durchgangelement, wie dies zum Beispiel in Flughäfen bei der Personenkontrolle verwendet wird.

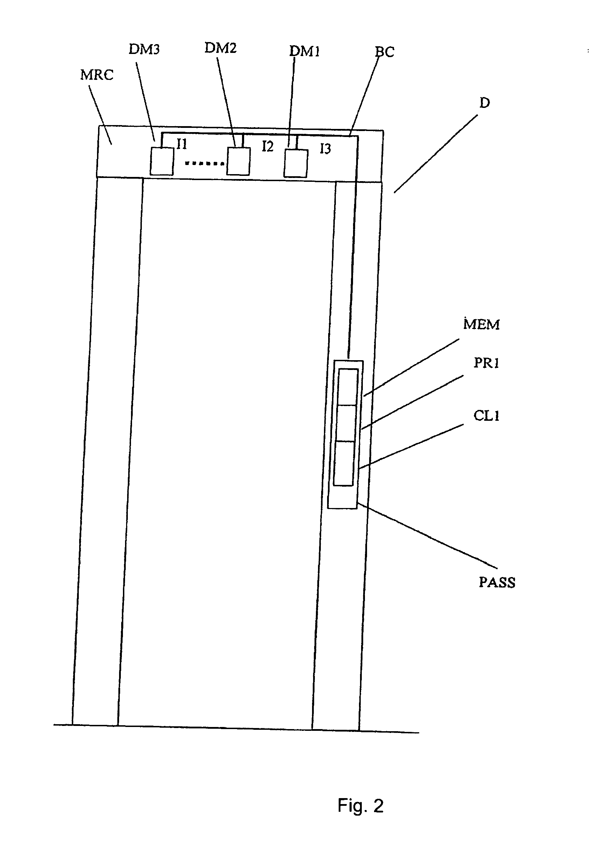

Figur 2 zeigt einen Rahmen MRC einer Tür D bzw. eines Tors D. Der Rahmen MRC enthalt in seinem oberhalb des Durchgangbereichs befindlichen Teil (wenigstens) drei Erkennungselemente DM1, DM2 und DM3, die über einen Kommunikationsbus BC miteinander sowie mit einem Steuerwerk PASS verbunden sind, das bei dem in Figur 2 dargestellten Ausführungsbeispiel einen Speicher MEM, einen Prozessor PR1 sowie eine elektronische Uhr CL1 aufweist.

Jedes der drei Erkennungselemente DM1, DM2 und DM3 wird durch einen Sensor gebildet.

Das Erkennungselement DM1 erkennt d.h. identifiziert Objekte (01, 02, ...) und/oder Personen (P1, P2, ...) und erzeugt eine erste Information 11, die eine Identifikation von Objekten und/oder von Personen bezeichnet. Es können unterschiedlich ausgestaltete Erkennungsmittel DM1 verwendet werden; dementsprechend können unterschiedliche erste Informationen I1 gebildet werden: so kann die erste Information I1 eine Anzahl von Personen und/oder von Objekten bezeichnen, die sich in einem ersten örtlichen Bereich (A1 in Figur 1) oder in einem zweiten Bereich (A2 in Figur 1) aufhalten; die erste Information I1 kann auch Personen (z.B. mit ihrem Namen) und/oder Objekte (z.B. mit einer objektindividuellen Bezeichnung "Werkzeug Nr. 0001 ") bezeichnen.

Das Erkennungsmittel DM2 erkennt eine Anwesenheit von Objekten (01, 02, ...) und/oder von Personen (P1, P2, ....) in dem ersten Bereich (A1 in Figur 1) oder in dem zweiten Bereich (A2 in Figur 1) und erzeugt eine zweite Information I2, die eine Identifikation von Objekten und/oder von Personen in dem ersten Bereich oder in dem zweiten Bereich bezeichnet.

Ein Erkennungsmittel DM3 erkennt eine Bewegung eines Objekts und/oder einer Person von dem ersten Bereich (A1 in Figur 1) in den zweiten Bereich (A2 in Figur 1) und erzeugt eine dritte Information I3, die eine Identifikation einer Bewegung eines Objekts und/oder einer Person von dem ersten Bereich in den zweiten Bereich oder von dem zweiten Bereich in den ersten Bereich bezeichnet.

Eine Uhr CI1 generiert eine erste Zeitinformation IT1, die die Zeit (Zeitpunkt, Zeitraum) der Identifikation eines Objekts und/oder einer Person bezeichnet; die Uhr generiert auch eine zweite Zeitinformation IT2, die die Zeit (Zeitpunkt, Zeitraum) der Identifikation eines Objekts und/oder einer Person in dem ersten Bereich A1 oder in dem zweiten Bereich A2 bezeichnet; schließlich generiert die Uhr eine dritte Zeitinformation IT3, die die Zeit der Bewegung eines Objekts und/oder einer Person von dem ersten Bereich in den zweiten Bereich oder von dem zweiten Bereich in den ersten Bereich bezeichnet.

Das System weist einen Speicher MEM auf, in dem die erste Information I1, die zweite Information I2, die dritte Information 13, die erste Zeitinformation IT1, die zweite Zeitinformation IT2 und/oder die dritte Zeitinformation IT3 gespeichert ist.

Weiterhin weist das System wenigstens einen Prozessor PR1 auf, der mit dem ersten Erkennungsmittel DM1, dem zweiten Erkennungsmittel DM2 und/oder mit dem dritten Erkennungsmittel DM3 sowie mit dem Speicher MEM verbunden ist.

Dem Prozessor PR1 ist ein Betriebsprogramm zugeordnet, das Profile wenigstens eines Objekts 01, 02, ... und wenigstens einer Person P1, P2, ... erzeugt. Diese Profile enthalten die erste Information I1, die zweite Information I2, die dritte Information I3, die erste Zeitinformation IT1, die zweite Zeitinformation IT2 und/oder die dritte Zeitinformation IT3.

Das Betriebsprogramm ist in der Weise ausgestaltet ist, dass der Prozessor PR1 in der Figur nicht dargestellte systemexterne Einrichtungen voreinstellt oder steuert.

Beispiele für Voreinstellungen sind das Einstellen eines Fernsehgeräts auf das Programm, das die vom System erkannte Person zu einem vorgegebenen Zeitraum (z.B. "nach 18 Uhr") vorzugsweise wählt, das Einschalten bzw. Um- und Ausschalten von Heizeinrichtungen und Klimageräten, um die Herstellung vorgegebener Räume auf eine vorgegebene Temperatur möglichst frühzeitig zu beginnen, die die vom System erkannte Person zu einem vorgegebenen Zeitraum (z.B. "von 23 bis 6:30 Uhr") vorzugsweise wählt. Ein weiteres Beispiel ist das durch eine Vorrichtung ausgeführte Öffnen bzw. Schließen von Fenstern.

Ebenso kann die akustische und/oder optische Wiedergabe von Informationen für die vom System erkannte Person erfolgen. Dabei handelt es sich zum Beispiel um Berichte bzw. Erinnerungen.

Das Betriebsprogramm kann weiterhin in der Weise ausgestaltet sein, dass der Prozessor systemexterne Einrichtungen nicht (nur) voreinstellt, sondern auch über einen längeren Zeitraum in unterschiedlichen Betriebsweisen steuert. So wird für eine vom System erkannte Person, die über einen längeren Zeitpunkt nicht in ihrer Wohnung anwesend war, eine Vorrichtung aktiviert, die zum Zeitpunkt der Personenerkennung zunächst Fenster öffnet und diese nach einem vorgegebenen Zeitraum wieder schließt.

Zu den systemexternen Einrichtungen gehören beispielsweise Leuchten, Heizungen, Fenster, Alarmeinrichtungen, und Telekommunikationsgeräte.

In einer weiteren Ausführungsform ist das Betriebsprogramm in der Weise ausgestaltet, dass die Generierung von Profilen von Objekten und/oder von Profilen von Personen auf der Basis einer zusätzliche Information (IC) erfolgt, die in das System eingegeben wird. Es kann auch vorgesehen sein, dass als zusätzliche Information ein systemexternes Personen- und/oder Objektprofil in das System eingegeben wird.

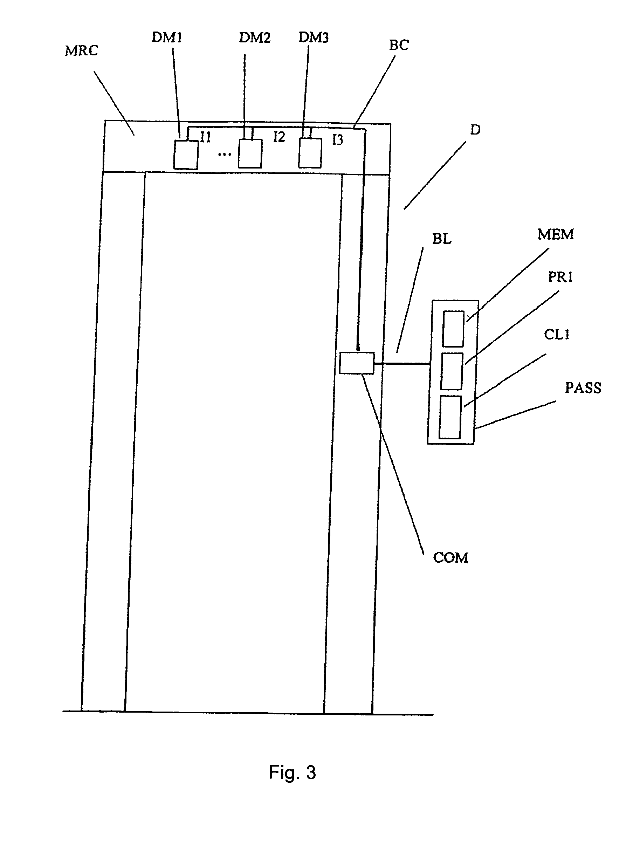

Wie Figur 3 zeigt, ist in der dargestellten Ausführungsform des erfindungsgemäßen Systems das erste Erkennungsmittel DM1, das zweite Erkennungsmittel DM2 und das dritte Erkennungsmittel DM3 in dem Rahmen MRC integriert; DM1, DM2 und/oder DM3 können aber auch benachbart zu dem Tor und/oder dem Rahmen angeordnet sein. Bei der in Figur 3 dargestellten Ausführungsform sind DM1, DM2 und DM3 über einen Kommunikationsbus BC einerseits miteinander und andererseits mit einer Kommunikationsschnittstelle COM verbunden, die z.B. seitlich am Türrahmen angeordnet ist. Die Kommunikationsschnittstelle COM ist wiederum über einen Bus BL mit dem Steuerwerk PASS verbunden, das den Prozessor PR1, den Speicher MEM sowie die Uhr CI umfasst.

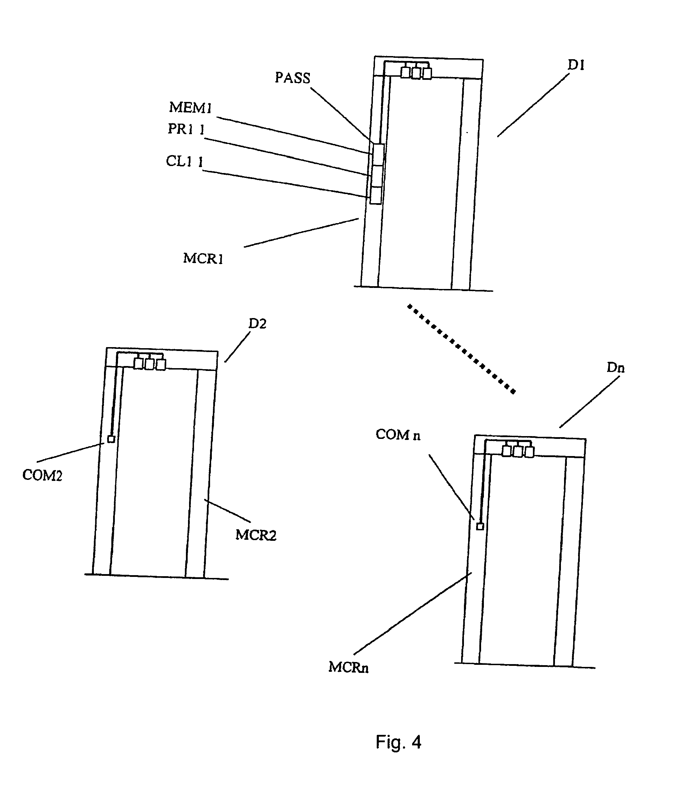

Figur 4 zeigt eine Ausführungsform des erfindungsgemäßen Systems, das eine Mehrzahl von Türen D und Rahmen MRC aufweist, wobei die Türen bzw. Rahmen in Kommunikationsverbindung miteinander stehen können. Grundsätzlich können die Türen D und/oder Rahmen MRC Steuerwerke PASS aufweisen; bei der in Figur 3 dargestellten Ausführungsform ist nur die oben in der Figur dargestellte Tür D mit genau einem Steuerwerk PASS und einer nicht dargestellten Kommunikationsschnittstelle ausgestattet, wobei die übrigen Türen mit dieser einen Tür mittels Verbindungsschnittstellen COM 2, COM n verbunden sein können. In diesem Fall hat übernimmt das einzige Steuerwerk PASS die Steueraufgaben des gesamten erfindungsgemäßen Systems.

Insbesondere ist das Steuerwerk in dem Tor und/oder in dem Rahmen integriert oder benachbart zu dem Tor und/oder dem Rahmen angeordnet.

Die anhand der Figuren beschriebenen systeminternen Verbindungen einzelner Systemkomponenten können drahtlos ausgeführt sein.

### Bezugszeichen

- D: Tür, Tor
- MRC: Rahmen, insbes. Torrahmen
- A1, A2: Erster örtlicher Bereich, zweiter örtlicher Bereich
- P1, P2, ...: Personen
- 01, 02, ...: Objekte, Gegenstände
- DM1, DM2, DM3: Erstes, zweites bzw. drittes Erkennungsmittel, Sensor
- I1: Erste Information, die eine Identifikation von Personen bzw. Objekten bezeichnet
- I2: Zweite Information, die eine Anwesenheit bezeichnet
- I3: Dritte Information, die eine Bewegung bezeichnet
- I4: Vierte Information, die eine personenindividuelle (z.B. P1) Berechtigung zum Aufenthalt in einem Bereich (z.B. A1, A2) bezeichnet
- I5: Fünfte Information, die eine personenindividuelle (z.B. P1) Berechtigung z.B. zur Nutzung einer externen Einrichtung EXT, insbesondere eines Telekommunikationsgeräts bezeichnet
- CL1: Uhr
- IT1, IT2. IT3: Erste, zweite bzw. dritte Zeitinformation
- BC: Kommunikationsbus
- BL: Busleitung
- PASS: Steuerwerk
- PR1: Prozessor
- MEM: Speicher
- EXT: Externe Einrichtung, z.B. Telekommunikationsendgerät
- COM: Kommunikationsschnittstelle
- IC: (Zusätzliche) Information

## Patentansprüche

1. System zum Überwachen von Objekt- und/oder Personenbewegungen, das aufweist:
- ein Tor (D) und/oder einen Rahmen (MRC) zwischen einem ersten örtlichen Bereich (A1) und einem zweiten örtlichen Bereich (A2),
- wenigstens ein erstes Erkennungsmittel (DM1) zum Identifizieren von Objekten (01, 02, ...) und/oder von Personen (P1, P2, ...) und zum Erzeugen einer ersten Information (I1), die eine Identifikation von Objekten und/oder von Personen bezeichnet,
- wenigstens ein zweites Erkennungsmittel (DM1) zum Erkennen einer Anwesenheit von Objekten (01, 02, ...) und/oder von Personen (P1, P2, ....) in dem ersten Bereich (A1) oder in dem zweiten Bereich (A2) und zum Erzeugen einer zweiten Information (I2), die eine Identifikation von Objekten und/oder von Personen in dem ersten Bereich (A1) oder in dem zweiten Bereich (A2) bezeichnet, und/oder
- wenigstens ein drittes Erkennungsmittel (DM3) zum Erkennen einer Bewegung eines Objekts und/oder einer Person von dem ersten Bereich (A1) in den zweiten Bereich (A2) oder von dem zweiten Bereich (A2) in den ersten Bereich (A1) und zum Erzeugen einer dritten Information (I3), die eine Identifikation einer Bewegung eines Objekts und/oder einer Person von dem ersten Bereich (A1) in den zweiten Bereich (A2) oder von dem zweiten Bereich (A2) in den ersten Bereich (A1) bezeichnet, und/oder
- wenigstens eine Uhr (CI1), die eine erste Zeitinformation (IT1) generiert, die den Zeitpunkt der Identifikation eines Objekts und/oder einer Person bezeichnet, die eine zweite Zeitinformation (IT2) generiert, die den Zeitpunkt der Identifikation eines Objekts und/oder einer Person in dem ersten Bereich (A1) oder in dem zweiten Bereich (A2) bezeichnet, die eine dritte Zeitinformation (IT3) generiert, die die Zeit (Zeitraum?) der Bewegung eines Objekts und/oder einer Person von dem ersten Bereich (A1) in den zweiten Bereich (A2) oder von dem zweiten Bereich (A2) in den ersten Bereich (A1) bezeichnet,
- einen Speicher (MEM), in dem die erste Information (I1), die zweite Information (I2), die dritte Information (I3), die erste Zeitinformation (IT1), die zweite Zeiteinformation (IT2) und/oder die dritte Zeitinformation (IT3) gespeichert ist, und
- wenigstens einen ersten Prozessor (PR1), der mit dem ersten Erkennungsmittel (DM1), dem zweiten Erkennungsmittel (DM2) und/oder mit dem dritten Erkennungsmittel (DM3) sowie mit dem Speicher (MEM) verbunden ist,
**dadurch gekennzeichnet,**
- **dass** dem Prozessor (PR1) ein Betriebsprogramm zugeordnet ist, das Profile wenigstens eines Objekts (01, 02, ...) und wenigstens einer Person (P1, P2, ...) erzeugt, und
- **dass** die Profile die erste Information (I1), die zweite Information (12), die dritte Information (13), die erste Zeitinformation (IT1), die zweite Zeiteinformation (IT2) und/oder die dritte Zeitinformation (IT3) enthalten.

2. System nach Anspruch 1, **dadurch gekennzeichnet, dass** das Betriebsprogramm in der Weise ausgestaltet ist, dass der Prozessor (PR1) systemexterne Einrichtungen (EXT), insbesondere Leuchten, Heizungen, Fenster, Alarmeinrichtungen, und Telekommunikationsgeräte in Abhängigkeit personenindividueller Informationen (I1) und/oder in Abhängigkeit eines Personen- und/oder eines Objektprofils voreinstellt und/oder unterschiedliche Betriebsweisen in Abhängigkeit des Personen- und/oder Objektprofils durchführen.

3. System nach einem der vorstehenden Ansprüche, **dadurch gekennzeichnet, dass** das System ein Steuerwerk (PASS) aufweist, das den Prozessor (PR1), den ersten Speicher (MEM) und die Uhr (CL1) aufweist.

4. System nach einem der vorstehenden Ansprüche, **dadurch gekennzeichnet, dass** das erste Erkennungsmittel (DM1), das zweite Erkennungsmittel (DM2) und das dritte Erkennungsmittel (DM3) in dem Tor (D) und/oder in dem Rahmen (MRC) integriert oder benachbart zu dem Tor (D) und/oder dem Rahmen (MRC) angeordnet sind.

5. System nach Anspruch 3, **dadurch gekennzeichnet, dass** das Steuerwerk (PASS) in dem Tor (D) und/oder in dem Rahmen (MRC) integriert oder benachbart zu dem Tor (D) und/oder dem Rahmen (MRC) angeordnet ist.

6. System nach Anspruch 3, **dadurch gekennzeichnet, dass** das Steuerwerk (PASS) außerhalb des Tors (D) und/oder außerhalb des Rahmens (MRC) angeordnet ist.

7. System nach Anspruch 6, **dadurch gekennzeichnet, dass** das Tor (D) und/oder der Rahmen (MRC) eine Kommunikationsschnittstelle (COM) aufweist, die Steuerinformationen mit dem Steuerwerk (PASS) austauscht.

8. System nach einem der vorstehenden Ansprüche, **dadurch gekennzeichnet, dass** es mehr als ein Tor (D) und/oder mehr als einen Rahmen (MRC) aufweist.

9. System nach Anspruch 8, **dadurch gekennzeichnet, dass** jedes Tor (D) und/oder jeder Rahmen (MRC) eine Kommunikationsschnittstelle (COM) aufweist.

10. System nach Anspruch 9, **dadurch gekennzeichnet, dass** genau ein Steuerwerk (PASS) für die Steuerung des Systems vorgesehen ist.

11. System nach einem der vorstehenden Ansprüche, **dadurch gekennzeichnet, dass** das Betriebsprogramm in der Weise ausgestaltet ist, dass die Generierung von Profilen von Objekten (01, 02, ...) und/oder von Profilen von Personen (P1, P2, ...) auf der Basis einer zusätzlichen Information (IC) erfolgt, die in das System eingegeben wird.

12. System nach einem der Ansprüche 2 bis 11, **dadurch gekennzeichnet, dass** das Betriebsprogramm in der Weise ausgestaltet ist, dass der Prozessor (PR1) systemexterne Einrichtungen (EXT), in Abhängigkeit personen- oder objektindividueller Informationen (I1), einer vierten Information (14), die eine personen- oder individuelle (P1, P2, ...) Berechtigung zum Aufenthalt in einem Bereich (A1, A2) bezeichnet, und/oder einer fünften Information (I5), die eine personenindividuelle Berechtigung zur Nutzung mindestens einer systemexternen Einrichtung (EXT) bezeichnet, und/oder in Abhängigkeit eines Personen- und/oder eines Objektprofils voreinstellt und/oder unterschiedliche Betriebsweisen in Abhängigkeit des Personen- und/ oder Objektprofils durchführen.

13. System nach Anspruch 12, **dadurch gekennzeichnet, dass** die vierte Information (I4) und/oder die fünfte Information (15) in dem erstem Speicher (MEM) oder in einem zweiten Speicher gespeichert ist.
